Europäisches Patentamt

European Patent Office

Office européen des brevets

(11) Publication number: **0 161 213**
A2

(12) # EUROPEAN PATENT APPLICATION

(21) Application number: 85810177.7

(22) Date of filing: 22.04.85

(51) Int. Cl.⁴: **G 01 K 11/06**

(30) Priority: 25.04.84 GB 8410549

(43) Date of publication of application:
13.11.85 Bulletin 85/46

(84) Designated Contracting States:
BE CH DE FR GB IT LI NL SE

(71) Applicant: CIBA-GEIGY AG
Postfach
CH-4002 Basel(CH)

(72) Inventor: Postle, Stephen Roderick
1, Hereford Drive Handforth
Wilmslow Cheshire SK9 3BB(GB)

(72) Inventor: Barber, Roy Patrick
9, Westbourne Grove
Sale Cheshire M33 1RP(GB)

(54) Colouring composition for monitoring the temperature.

(57) Assembly for use in monitoring if a stored product has exceeded a predetermined temperature, which comprises a colourable composition containing an encapsulated non-aqueous solvent, a dispersion of a solvent dye and a dispersion of an inert pigment.

- 1 -

8-14848/=/ILF 1359

Colourable assembly.

This invention relates to a colourable assembly for use in monitoring
if a stored product has exceeded a predetermined temperature.

Many goods are stored for long periods at temperatures at which no
deterioration of the goods will occur. However it is most important
that any rise in temperature above a predetermined temperature at
which deterioration of the goods can occur is monitored. It is
necessary that an irreversible indication is given of any such rise
in temperature and a maximum-minimum thermometer could be used for
this purpose. However such thermometers are expensive and furthermore it is desirable that, in case of local changes of temperature,
an indicator is affixed to each of the packages of goods in a
storage system.

A number of inexpensive devices have been suggested which can be
affixed to packages to monitor irreversibly a rise in temperature.
A number of these devices are capsules rather than labels and monitor
specifically when the temperature rises above the melting point of
water ice. Thus, it was suggested, that the act of thawing
releases moisture associated with the frozen goods and this
moisture causes a colour change or exposes a warning sign. In another
proposed method a mark or sign present in or as a frozen liquid
changes in appearance when a thaw occurs. In yet another device the
act of freezing expands the water therein and breaks the capsule,
this is only observed when the temperature rises above the freezing
point of water. In some other proposals an irreversible colour change
occurs at the predetermined temperature when at least one of the components is free flowing liquid which is rendered mobile at the predetermined temperature.

However, this can be messy unless in a capsule and often the colour change is not very pronounced.

One method of monitoring rises in temperature which has been proposed employs a fatty acid or ester which melts at the required temperature and which then is absorbed into an absorbent pad altering the colour of the pad or rendering the pad light-translucent so revealing a hidden message. However such methods do not provide a very readily visible indication of the rise in temperature.

In US 4232552 a temperature indicator is described wherein a dye is dissolved in a solvent to form a solid solution. When this solid solution is raised in temperature to melt the solvent the dye changes colour. In US 4232552 it is stated that such solid solutions might be microencapsulated and the microcapsules coated on a carrier. However the colour change using such a solid solution of a dye is reversible as described in US 4232552 and in order to monitor if a stored product has at one stage exceeded a predetermined temperature it is required that the colour change should not be reversible in case the temperature falls and causes a reversal of the colour change.

We have found a colourable assembly which makes use of a dye/ solvent system which is irreversible and which provides a very distinctive change in colour at a predetermined temperature.

According to the present invention there is provided an assembly for use in monitoring if a stored product has exceeded a predetermined temperature which comprises a carrier on which is coated a colourable composition which comprises frangible microcapsules which contain a non-aqueous solvent which melts at the said predetermined temperature, a dispersion of a solvent dye which dissolves in the said solvent and a dispersion of an inert pigment of contrasting colour to the solvent dye which does not dissolve in the solvent.

According to another aspect of the present invention there is provided a method of monitoring if a stored product has exceeded a predetermined temperature which comprises acclimatising the assembly as hereinbefore defined to the storage temperature of the stored product, then when it is in close proximity with the product, breaking the capsules of encapsulated solvent and observing when a colour change occurs which indicates that the stored product has exceeded the said predetermined temperature.

When the capsules are broken the solvent can not dissolve the solvent dye as it is still a solid at the storage temperature of the stored product.

However when or if the temperature rises the solvent melts and as it is no longer encapsulated it is able to mix with the other components of the colourable composition. It dissolves the solvent dye and in doing so the whole composition assumes the colour of the dissolved dye. The dispersion of the solid solvent dye is the same colour as the dissolved dye but in a very degraded form. Thus it is required to enhance the contrast between the solid solvent dye and the dissolved solvent dye by the presence of the inert pigment. Thus for example if a blue solvent dye is used and a yellow inert pigment the colourable composition both before the capsules of solvent have been ruptured and after rupture of the capsules but below the predetermined temperature is a greenish colour. However after the temperature has risen when the capsules have been broken the molten solvent dissolves the blue solvent dye and the whole assembly assumes a distinctive blue colour which completely masks the yellow dye of the undissolved inert pigment. Thus use is made of the very great increase in covering power of the dye dissolved in the solvent compared with the solid dye granules which are present on the carrier. This very great increase in covering power completely masks the contrasting colour provided by the inert pigment.

Preferably the colourable composition comprises an inert white pigment for example titanium dioxide or barium sulphate. This white pigment may be the colour contrasting pigment especially when the titanium dioxide is slightly yellow as it often is or it may be present in addition to the colour contrasting inert pigment.

Dyes and pigments can be divided into three broad categories:

a) water soluble dyes

b) non-aqueous solvent soluble dyes

c) inert pigments which are essentially insoluble in any solvent.

Class a) dyes are not suitable for use in the present invention.

Solvent dyes of b) above are listed in the Colour Index 3 Edition as Solvent dyes when they are prepared in a form suitable for pigmentation.

Classes of suitable dyes include monoazo, disazo, polyazo, metal complexes thereof, anthraquinone, triarylmethane, xanthene, azine, oxazine, thiazine, sulphophthalein, cyanine or acridine dyes.

A very suitable dye is C.I. Solvent Blue 53, a monoazo dyestuff. Others C.I. Solvent Black 28, a monoazo metal complex dyestuff , C.I. Solvent Blue 49 (C.I. 50315 derivative) and C.I. Solvent Violet 24, a monoazo dyestuff.

Inert pigments of c) above are often inorganic compounds including metal oxides. Suitable inert pigments are C.I. pigment yellow 34, Recketts Cadmium Yellow 16 and C.I. 77 199.

Preferably the capsules of solvent and a dispersion of the solvent dye and inert pigment in an aqueous gelatin solution are coated on to a carrier either in one, two or three layers as long as the melted solvent can come into contact with the solvent dye.

A large number of non-aqueous solvents are of use in the present invention. Classes of useful non-aqueous solvents are for example fatty acid esters such as benzyl laurate, butyl stearate, dicarboxylic acid esters such as diethylsuccinate, dimethyl phthalate, fatty acids such as lauric acid, myristic acid, aromatic hydrocarbons such as toluene, xylene, benzyltoluene, naphthalene, alkyl naphthalene diphenyl alkanes, halogenated aromatic compounds such as bromonaphthalene, and acylated aromatic compounds such as acetonaphthalene.

Certain esters and fatty acids make very useful non-aqueous solvents. They are shown in the following Table 1.

Table 1:

| Compound | m.p. in °C |
|---|---|
| diethyl succinate | − 20 |
| diethyl phthalate | − 3 |
| 1-bromonaphthalene | + 2 |
| dimethyl phthalate | + 2 |
| dimethyl adipate | + 8 |
| benzyl laurate | + 8.5 |
| decyl deconoate | + 9.7 |
| aceto naphthalene | + 12 |
| butyl stearate | + 12.2 |
| ethyl myristate | + 12.3 |
| dimethyl succinate | + 18-19 |
| benzyl myristate | + 20.5 |
| benzyl palmitate | + 27.2 |
| lauric acid | + 43 |
| myristic acid | + 54 |
| palmitic acid | + 61-62.5 |

The term non-aqueous solvent means either a single non-aqueous compound which can act as a solvent for the solvent dye or an eutectic mixture of non-aqueous solvents which has a sharply defined melting point, the mixture being capable of acting as the solvent for the solvent dye.

Examples of stored products and the temperatures at which spoilation starts to occur are shwon in Table 2, where T is the start of spoilation temperature in °C.

Table 2:

| Stored Products | T |
|---|---|
| Frozen Foods | - 5 |
| Whole Blood | + 4 |
| Vaccines and Insulin | + 8 |
| Steroid Creams | + 30 |

Thus as the storage temperature of many products is below ambient temperature the method of the present invention in which the solvent is kept in capsules during the preparation of colourable composition on the carrier enables the colour formation reaction wherein the solvent dissolves the solvent dye using a solvent which is liquid at ambient temperature to be utilised to monitor the storage of products which spoil at ambient temperature. Without the use of capsules it would be very difficult to prepare the monitoring assembly as the preparation would have to be carried out well below ambient temperature.

Encapsulation of the solvent can be performed by any of the usual encapsulation techniques for example interfacial polymerisation, in situ polymerisation, in-liquid curing coating coacervation from an organic solvent solution system, melt-dispersing and cooling, in-gas suspending coating or spray drying.

The preferred size of the resultant capsules of use in the present invention is from 2 to 20 µm.

Preferably the capsules and the remaining component of the colourable composition are dispersed in a binder and coated on a carrier. A suitable binder is gelatin. Other useful binders are nitrocellulose, cellulose acetate, polyvinyl pyrrolidone, polyvinyl alcohol, polyvinyl butyral or a butyl acrylate/styrene latex.

The carrier onto which the colourable composition is applied may be a label composed of paper or film material or be a plastics material ticket or similar device. Also the carrier may be a small piece of paper which after application of the colourable composition is attached to a layer label or sticker which bears written instructions or other printed matter. However in one embodiment the carrier is the stored product itself and the colourable composition is coated thereon.

It may be sprayed on or jetted on from an ink jet. Alternatively, it may be coated on through a stencil or silk screen or may be printed on by a contact printing process.

The colourable composition when applied to the carrier can be armed after acclimatisation by physically breaking the capsule by hand or by use of a rough surface such as sandpaper. Alternatively a stylus or (semi) automatic punching device may be employed. In this latter way, a hidden code may be imprinted.

The label which carries the colourable composition may comprise two separate colourable compositions one of which for example changes colour at $-3°C$ and the other of which changes colour at $0°C$.

It is to be understood that not all solvent dyes are soluble in all non-aqueous solvents and a preliminary trial is sometimes required to ensure that the selected solvent dye is soluble in the selected solvent.

The microcapsules used in the Examples were prepared as follows:

A 5% aqueous gelatin solution (deionised blend; 80 g) was heated
at 70°C and the appropriate solvent to be encapsulated (30 g) was
added and stirred vigorously to form fine droplets. To this mixture
was added slowly with stirring a 5% aqueous gum acacia solution
(Hopkins and Williams blend; 80 g).

The pH-value of the whole was adjusted to 4.0, and stirring continued for 3 to 4 hours at 50°C. Water (200g ) was then added,
together with 40% aqueous formaldehyde solution (1g). The whole
was cooled to 10°C and the pH-value adjusted to 9.0.

The microcapsules produced had a median size in the range 5 to 10 µm.

The use of gelatin and gum acacia as the wall material is not
intended to limit the techniques and materials by/from which
microcapsules suitable for use in this invention can be manufactured.

The following Examples will serve to illustrate the invention.

In all the Examples microcapsules were used which had a mean diameter
of 5 to 10 µm.

Example 1: A 5% dispersion of Cadmium Yellow in 4% aqueous gelatin
(38 g) and a 5% dispersion of C.I.Solvent Blue 53 in 4% aqueous
gelatin (16 g) were mixed. A 10% aqueous solution of a wetting agent,
which is a mixture of an adduct of octylphenol and ethyleneoxide and
the sodium salt of a sulphonated adduct of octylphenol and ethylene
oxide (0.5 g) and a 10% aqueous solution of a wetting agent, which
is a mixture of an adduct of octylphenol and ethyleneoxide (0.5 g)
were added, followed by a diethylphthalate microcapsule dispersion
(2 g of 38% solids). The whole was made up to 96 g with water and,
immediately prior to coating, 1% formaldehyde solution (4 g) added.

The mixture was coated at 3 m/min onto a white subbed polyethylene paper laminate base, to give a coating weight of 50 mg/dm$^2$.

The colourable coating was a light greenish colour on the white paper background.

The paper carrier was affixed to a packet of peas in a deep freeze. After 1 hour to allow the carrier to become acclimatised to the temperature of the deep freeze which was -5°C the carrier was abraded with a stylus to break the microcapsules. The temperature of the deep freeze was then allowed to rise. When it reached -3°C which is the melting point of the diethylphthalate a bright blue colour was observed on the carrier which indicated that packet of peas had exceeded -4°C.

Examples 2 to 6: The colourable compositions were prepared as in Example 1 but with the compositions as indicated below in Table 2. The carrier in each case was polyethylene laminate white paper. The carrier were acclimatised and the capsules broken after acclimatisation as described in Example 1.

Table 2:

| Example | Solvent | Solvent Dye | Inert Pigment | Melting point of solvent °C | Colour |
|---|---|---|---|---|---|
| 2 | Benzyl Laurate | C.I. Solvent Blue 53 | Cadmium Yellow | + 8 | Blue |
| 3 | Benzyl Myristate | C.I. Solvent Blue 53 | Cadmium Yellow | + 20 | Blue |
| 4 | 1-Bromo-naphthalene | C.I. Solvent Blue 53 | Cadmium Yellow | - 1 | Blue |
| 5 | Diethyl-phthalate | C.I. Solvent Blue 53 | Titanium Dioxide | - 3 | Light Blue to Sky Blue |
| 6 | Diethyl-phthalate | C.I. Solvent Black 28 | Cadmium Yellow | - 3 | Light Khaki to Dark Brown |

Example 7:

Two colourable compositions 1 and 2 were prepared as described
in Example 1 and coated onto two clearly defined areas on a piece
of subbed polyethylene laminated white paper. Composition 1 was the
composition 4, composition 2 was the composition of Example 6.

An assembly of this type can be used to determine if the stored
product has exceeded -3°C but has not exceeded -1°C. In the case
of some stored products if they have exceeded by a small amount a
predetermined temperature they can continue to be stored but for
a limited period, but if they have also exceeded a higher predetermined temperature they must be removed from storage and disposed of. Thus the assembly of this Example is of use for products
which can be continued to be stored for a limited period at -3°C
to -1°C but if the temperature rises above- -1°C they must be
disposed of.

Thus the assembly of this Example was affixed to such a product
and after acclimatisation of 1 hour at the storage temperature of
-5°C the capsules of solvent in the colourable compositions
were broken. The temperature of the deep freeze was then allowed
to gradually rise in temperature. When the temperature had reached
-3°C the colour of composition 2 changed to a dark brown but the
colour of composition 1 was unchanged. The colour of composition 1
was unchanged until the temperature of the deep freeze was allowed
to rise further. When it reached -1°C the colour of composition 1
changed to a dark blue, thus indicating that the higher predetermined
temperature had also been exceeded.

CLAIMS:

1. An assembly for use in monitoring if a stored product has exceeded a predetermined temperature, which comprises a carrier on which is coated a colourable composition which comprises frangible microcapsules which contain a non-aqueous solvent which melts at the said predetermined temperature, a dispersion of a solvent dye which dissolves in the said solvent and a dispersion of an inert pigment of contrasting colour to the solvent dye which does not dissolve in the solvent.

2. An assembly according to claim 1, wherein the colourable composition comprises an inert yellow pigment.

3. An assembly according to claim 1, wherein the colourable composition comprises an inert white pigment.

4. An assembly according to claim 3, wherein the white pigment is titanium dioxide or barium sulphate.

5. An assembly according to any one of claims 1 to 4, wherein the colourable composition is coated on the carrier by use of a binder.

6. An assembly according to claim 5, wherein the binder is gelatin, nitrocellulose, cellulose acetate, polyvinyl pyrrolidone, polyvinyl alcohol, polyvinyl butyral or a butyl acrylate/styrene latex.

7. An assembly according to claim 6 wherein the binder is gelatin, polyvinyl alcohol, cellulose acetate, polyvinyl butyral or a butyl acrylate/styrene latex.

8. An assembly according to claim 7, wherein the binder is gelatin.

9. An assembly according to any one of claims 1 to 8 wherein the solvent dyes are monoazo, disazo, polyazo, metal complexes thereof, anthraquinone, triarylmethane, xanthene, azine, oxazine, thiazine, sulphophthalein, cyanine or acridine dyes.

10. An assembly according to claim 9, wherein the solvent dyes are monoazo dyes or metal complexes thereof.

11. An assembly according to any one of claims 1 to 10, wherein the non-aqueous solvent is a fatty acid ester, dicarboxylic acid ester, fatty acid, aromatic hydrocarbon, halogenated or acylated aromatic compound.

12. An assembly according to any one of claims 1 to 11, wherein the non-aqueous solvent is diethyl succinate, diethyl phthalate, 1-bromonaphthalene, dimethyl phthalate, dimethyl adipate, benzyl laurate, decyl decanoate, aceto naphthalene, butyl stearate, ethyl myristate, dimethyl succinate, benzyl myristate, benzyl palmitate lauric acid, myristic acid, palmitic acid.

13. An assembly according to any one of claims 1 to 12 which comprises on the carrier two separate colourable compositions which change colour at different temperatures.

14. A method of monitoring if a stored product has exceeded a predetermined temperature which comprises acclimatising an assembly as claimed in any one of claims 1 to 13 to the storage temperature of the stored product, then when it is in close proximity whith the product, breaking the capsules of encapsulated solvent and observing when a colour change occurs which indicates that the stored product has exceeded the said predetermined temperature.

15. A method of monitoring if a stored product has exceeded a
predetermined lower temperature but is still below a predetermined higher temperature which comprises acclimatising an
assembly as claimed in claim 13 to the storage temperature of
the stored product, that when it is in close proximity with the
product breaking the capsules of encapsulated solvent and observing
when a colour change occurs in the colourable composition which
changes colour at the lower temperature which indicates that the
stored product has exceeded the said predetermined lower temperature
and noting  if a change in colour of the second colourable composition
has occurred which, if it has, would indicate that the stored
product has exceeded also the higher predetermined temperature.

FO 7.1 KH/rn*